# FASCICULE DE BREVET EUROPEEN

(11) **EP 1 935 813 B1**
(45) Date de publication et mention de la délivrance du brevet: **25.02.2009**
(21) Numéro de dépôt: 07291517.6
(22) Date de dépôt: 13.12.2007
(51) Int. Cl.: B65G 47/44, A24C 5/32, A24C 5/35, B65B 19/10

(54) **Dispositif pour la distribution un à un d'objets en forme de bâtonnets**
Vorrichtung zur Einzelverteilung von Gegenständen in Stäbchenform
Device for distributing stick-shaped objects one by one

(30) Priorité: 21.12.2006 FR 0611215
(43) Date de publication de la demande: 25.06.2008
(73) Titulaire: Société Nationale d'Exploitation Industrielle des Tabacs et Allumettes S.E.I.T.A., 75685 Paris Cedex 14 (FR)
(72) Inventeur: Cholet, Georges, 45140 Ormes (FR); Verstichel, Gwennaël, 45200 Amilly (FR); Lucas, Cédric, 45400 Fleury-les-Aubrais (FR)
(74) Mandataire: de Saint-Palais, Arnaud Marie

(56) Documents cités:
- DE-A1- 2 549 753
- DE-A1- 2 756 876
- FR-A- 1 415 043
- GB-A- 874 700
- GB-A- 1 008 695
- GB-A- 1 008 696
- US-A- 3 447 283

## Description

La présente invention a pour objet un dispositif permettant la distribution un à un d'objets en forme de bâtonnets. Elle concerne plus spécifiquement mais non exclusivement, un distributeur automatique permettant le chargement de cigarettes ou de filtres de cigarettes dans une station de mesure.

On sait qu'il existe déjà des chargeurs d'objets en forme de bâtonnets tels que des cigarettes ou des filtres à cigarettes, ces chargeurs comprenant généralement un convoyeur à bande transporteuse qui comporte sur sa surface supérieure des séparateurs permettant de définir des compartiments dans lesquels les cigarettes ou lesdits filtres sont disposés perpendiculairement à l'axe de déplacement de la bande. De cette manière, une translation de la bande transporteuse permet d'amener chaque compartiment successivement dessus ou à côté d'un réceptacle d'une station de mesure dans lequel lesdites cigarettes ou lesdits filtres à cigarettes peuvent être transférés.

Un dispositif pour la manipulation de cigarettes est connu du document FR 1 415 043 A.

Par ailleurs, ces dispositifs font intervenir généralement des mécanismes - pousseurs permettant le chargement des objets en forme de bâtonnets dans ledit réceptacle. Il s'avère que cette solution présente un certain nombre d'inconvénients.

Ainsi, lors du transfert, les objets en forme de bâtonnets ont tendance à basculer et à se disposer aléatoirement dans le réceptacle du dispositif de mesure. Il s'en suit un risque important de bourrage au niveau de ce réceptacle et de détérioration des cigarettes ou des filtres. L'emploi des mécanismes - pousseurs et de circuits de commande appropriés de ces mécanismes ainsi que la complexité de l'ensemble du dispositif qui en résulte impliquent en conséquence un prix de revient relativement élevé, des risques de dysfonctionnement et des difficultés de réglage et de maintenance.

La présente invention a donc plus particulièrement pour but de supprimer ces inconvénients. Elle propose un chargeur permettant la distribution d'objets en forme de bâtonnets dans un réceptacle d'un dispositif tel qu'un poste de mesure sans qu'il soit nécessaire de recourir à des mécanismes - pousseurs, ce qui permet notamment de simplifier les réglages mécaniques, de réduire les coûts de réalisation et de maintenance, et de faire en sorte que pendant leur transfert entre les compartiments et le réceptacle les cigarettes ou les filtres soient axés parallèlement les uns aux autres.

A cet effet, l'invention propose un dispositif pour la distribution un à un d'objets en forme de bâtonnets, ce dispositif faisant intervenir :
- un convoyeur comprenant une bande transporteuse sans fin circulant autour d'au moins deux poulies ou galets respectivement amont et aval dont l'un au moins est entraîné par un moteur, la face extérieure de cette bande étant munie de séparateurs transversaux qui délimitent une succession de compartiments dans lesquels les objets en forme de bâtonnets viennent se disposer ;
- une trémie dans laquelle les objets en forme de bâtonnets contenus dans les compartiments sont successivement déversés ;
- un distributeur un à un disposé dans le fond de la trémie et dans lequel les objets en forme de bâtonnets viennent s'engager par gravité.

Selon l'invention, ce dispositif est caractérisé en ce qu'il comprend :
- un carter de support et de guidage comprenant une forme semi-cylindrique, sensiblement coaxial à la poulie aval et dont le rayon est sensiblement égal à la somme du rayon de la poulie et de la hauteur des séparateurs, ce carter étant orienté de telle manière qu'il assure le maintien des objets en forme de bâtonnets à l'intérieur de leurs compartiments respectifs lors du passage de la bande sur ladite poulie ;
- une cloison verticale flexible séparant l'espace interne de la trémie en deux sous - parties communicantes, l'axe vertical de cette cloison et l'extrémité inférieure dudit carter étant sensiblement coaxiaux.

De cette façon, à chaque déplacement de la bande transporteuse correspondant à un pas, les objets en forme de bâtonnets compris dans le compartiment positionné au - dessus de la trémie sont transférés de manière contrôlée dans la sous - partie correspondant de la trémie, avant de venir s'engager dans le distributeur un à un.

Avantageusement, le dispositif selon l'invention peut comprendre au moins deux détecteurs, tels que des cellules photoélectriques, permettant d'une part d'assurer l'arrêt de la bande transporteuse à chaque avancée d'un pas en fonction de repères définis et d'autre part, de détecter le transfert des objets en forme de bâtonnets dans la trémie.

De manière avantageuse, le convoyeur peut notamment être disposé selon un axe sensiblement horizontal ou vertical. Dans ce dernier cas, le carter de support et de guidage est sensiblement coaxial à la poulie amont, lesdits séparateurs de la bande transporteuse sont disposés obliquement et la trémie est disposée latéralement à proximité de la partie supérieure du convoyeur.

Des modes d'exécution de l'invention seront décrits ci-après, à titre d'exemples non limitatifs, avec référence aux dessins annexés, dans lesquels :
La figure 1 est une représentation schématique du dispositif selon l'invention pour la distribution un à un d'objets en forme de bâtonnets, ce dispositif comprenant un convoyeur axé horizontalement.
La figure 2 est une représentation schématique de la trémie, d'une partie du carter et d'une poulie du dispositif selon l'invention représenté sur la figure 1.
La figure 3 est une représentation schématique du dispositif selon l'invention pour la distribution un à un d'objets en forme de bâtonnets, ce dispositif comprenant un convoyeur axé verticalement.
La figure 4 est une représentation schématique de la trémie, d'une partie du carter et d'une poulie du dispositif selon l'invention représenté sur la figure 3.

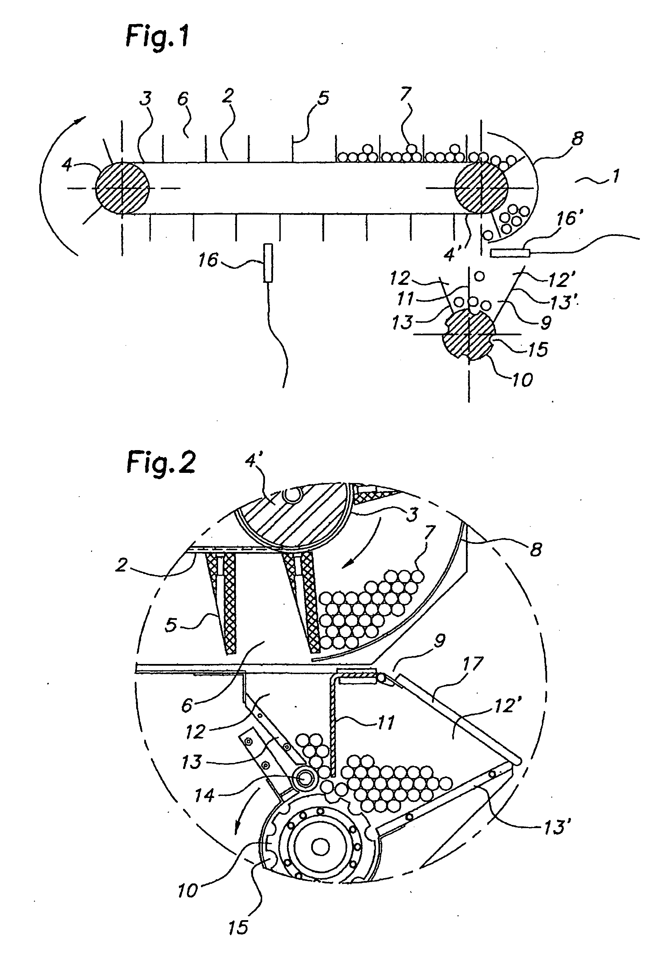

Dans cet exemple, tel que cela est représenté sur la figure 1, le dispositif selon l'invention 1 comprend un convoyeur 2 disposé selon un axe sensiblement horizontal, ce convoyeur 2 comportant une bande transporteuse sans fin 3 circulant autour de deux poulies ou galets 4, 4' respectivement amont et aval dont l'un au moins est entraîné par un moteur (non représenté).

La face extérieure de cette bande transporteuse sans fin 3 comprend des séparateurs transversaux 5 qui délimitent une succession de compartiments 6 dans lesquels des objets en forme de bâtonnets 7 viennent se disposer. Dans cet exemple, la bande transporteuse sans fin 3 circule dans le sens horaire.

Le dispositif selon l'invention 1 comporte également un carter 8 de support et de guidage comprenant une forme semi-cylindrique, sensiblement coaxial à la poulie aval 4' et dont le rayon est sensiblement égal à la somme du rayon de la poulie 4' et de la hauteur des séparateurs 5, ce carter 8 étant orienté de telle manière qu'il assure le maintien des objets en forme de bâtonnets 7 à l'intérieur de leurs compartiments respectifs 6 lors du passage de la bande 3 sur ladite poulie 4'.

De plus, le dispositif selon l'invention 1 comprend une trémie 9 dans laquelle les objets en forme de bâtonnets 7 contenus dans les compartiments 6 sont successivement déversés. Cette trémie 9 comporte :
- un distributeur un à un 10 disposé dans le fond de la trémie 9 et dans lequel les objets en forme de bâtonnets 7 viennent s'engager par gravité, ce distributeur un à un 10 pouvant être commandé par un moteur (non représenté) ; tel que cela est représenté sur la figure 2, ce distributeur 10 présente sensiblement la forme d'un magasin cylindrique et mobile autour de son axe (en l'espèce, dans le sens trigonométrique), ce distributeur 10 comprenant sur sa surface supérieure des encoches coaxiales 15 qui présentent sensiblement une forme semi - cylindrique et dont le diamètre est sensiblement égal à celui d'un objet en forme de bâtonnets 7 ;
- une cloison verticale flexible 11 pouvant être en cotte de mailles et qui sépare l'espace interne de la trémie 9 en deux sous - parties communicantes 12, 12', la partie inférieure de cette cloison verticale 11 et ledit distributeur un à un 10 étant séparés d'une distance sensiblement égale au diamètre d'un objet en forme de bâtonnets 7 de plus, l'axe vertical de cette cloison 11 et l'extrémité inférieure dudit carter 8 sont sensiblement coaxiaux ;
- des parois latérales 13, 13' qui sont préférentiellement obliques par rapport à la cloison verticale 11 ainsi, tel que cela est représenté sur la figure 2, la partie 12 de la trémie 9 située à gauche de la cloison verticale 11 présente sensiblement la forme d'un entonnoir.

La trémie 9 peut également comprendre un dispositif cylindrique et mobile autour de son axe 14 (en l'espèce, dans le sens trigonométrique) obturant l'espace compris entre l'extrémité inférieure de la paroi latérale gauche 13 et le distributeur un à un 10, la distance minimale qui sépare ce dispositif 14 de la cloison verticale 11 étant sensiblement égale au diamètre d'un objet en forme de bâtonnets 7.

De cette manière, après avoir déclenché la mise en route de la bande transporteuse 3 (en activant par exemple le moteur entraînant au moins une poulie ou un galet 4, 4') et rempli d'objets en forme de bâtonnets 7 des compartiments supérieurs 6 du convoyeur 2, les objets en forme de bâtonnets 7 compris dans le compartiment 6 situé le plus en aval dans le carter 8 tombent dans la partie 12 de la trémie 9 située à gauche de la cloison verticale 11 sur la figure 2.

Ainsi, à chaque déplacement de la bande transporteuse 3 correspondant à un pas, les objets en forme de bâtonnets 7 compris dans ce compartiment 6 positionné au - dessus de la trémie 9 sont transférés de manière contrôlée dans ladite partie 12 de la trémie 9, avant de venir s'engager par gravité dans le distributeur un à un 10.

De manière avantageuse, la vitesse de déplacement de la bande transporteuse 3 peut être contrôlée de façon à permettre que lesdits objets en forme de bâtonnets 7 tombent un à un dans ladite partie 12 de la trémie 9. Ce contrôle de la vitesse de déplacement de la bande transporteuse 3 associé à la forme en entonnoir de la partie 12 de la trémie 9, aux caractéristiques de la cloison verticale flexible 11 et à la présence du dispositif cylindrique et mobile autour de son axe 14 permet de maîtriser de manière optimale le transfert et la répartition des objets en forme de bâtonnets 7 dans la trémie 9, ainsi que leur engagement dans le distributeur un à un 10 dont la rotation est commandée.

A l'issue du déplacement de la bande transporteuse 3 correspondant à un pas, tous les objets en forme de bâtonnets 7 compris dans ledit compartiment 6 ont été transférés dans la trémie 9, le déplacement de la bande transporteuse 3 pouvant être suspendu jusqu'à ce que tous ces objets 7 aient été évacués par le distributeur un à un 10.

Avantageusement, le dispositif selon l'invention 1 peut comprendre au moins deux détecteurs 16, 16', tels que des cellules photoélectriques, permettant :
- d'assurer l'arrêt de la bande transporteuse 3 à chaque avancée d'un pas en fonction de repères déterminés ainsi, les repères sont définis de manière à ce qu'à chaque arrêt de la bande transporteuse 3 un desdits compartiments 6 se trouve au - dessus de la partie 12 de la trémie 9 située à gauche, dans l'exemple représenté sur la figure 2, de la cloison verticale 11 ; et
- de détecter le transfert des objets en forme de bâtonnets 7 dans la trémie 9, le détecteur 16' étant alors positionné entre la partie inférieure du carter 8 et la trémie 9.

La partie 12' de la trémie 9 représentée à droite de la cloison verticale 11 sur la figure 2 peut comprendre un couvercle 17 qui permet lorsqu'il est relevé, de remplir ladite partie 12' de la trémie 9 d'objets en forme de bâtonnets 7. De cette manière, ces objets en forme de bâtonnets 7 peuvent être distribués par le distributeur un à un 10 sans avoir au préalable été chargés dans les compartiments 6 du convoyeur 2.

Le convoyeur 2 peut être compris dans une enceinte (non représentée) afin de le protéger ainsi que les objets en forme de bâtonnets 7. Avantageusement, cette enceinte peut comprendre au moins sur sa partie supérieure, des trappes d'accès disposées de manière à être dans l'axe des compartiments 6 lorsque le convoyeur 1 est à l'arrêt, le dispositif selon l'invention 1 pouvant comprendre un détecteur inductif (non représenté) permettant de détecter l'ouverture desdites trappes.

De manière avantageuse, le convoyeur 2 peut être commandé par une station de commande (non représentée).

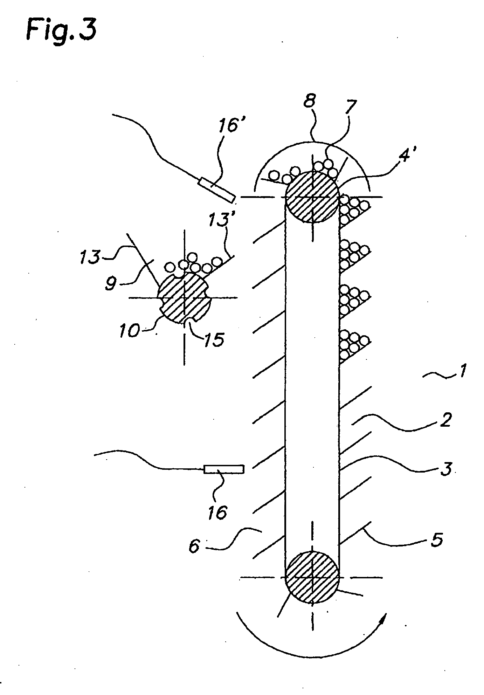

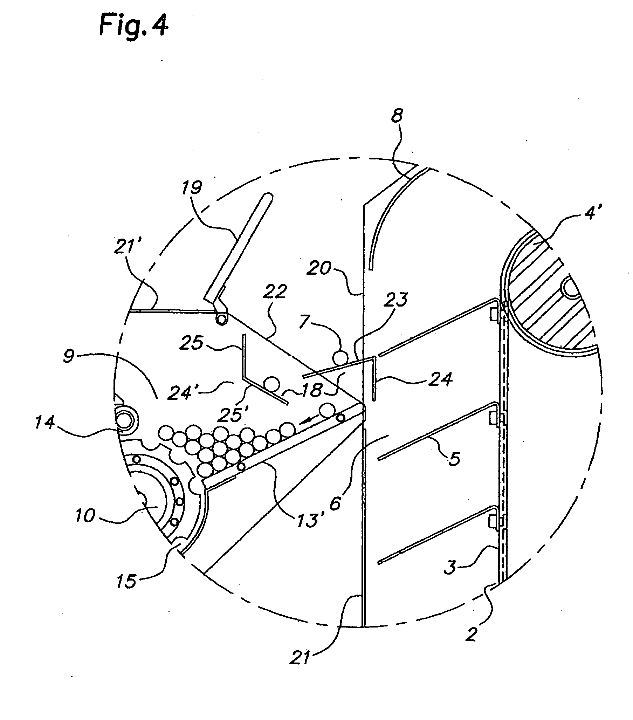

Selon une variante d'exécution tel que cela est représenté sur les figures 3 et 4, le convoyeur 2 du dispositif selon l'invention 1 peut être disposé selon un axe sensiblement vertical et présente dans ce cas les particularités suivantes, sachant qu'en l'espèce la bande transporteuse 3 se déplace dans le sens trigonométrique :
- le carter de support et de guidage 8 est sensiblement coaxial à la poulie amont 4 ;
- lesdits séparateurs 5 de la bande transporteuse 3 sont disposés obliquement de telle façon qu'ils soient dirigés vers le haut lorsqu'ils se trouvent sur la face ascendante de la bande transporteuse 3 (sur la figure 3, la face se trouvant à droite) et vers le bas lorsqu'ils se trouvent sur la face descendante (sur la figure 3, la face se trouvant à gauche) ; et
- la trémie 9 est disposée latéralement, à proximité de la partie supérieure du convoyeur 2 et du côté où se trouve la face descendante de la bande transporteuse 3.

Afin de permettre que tous les objets en forme de bâtonnets 7 compris dans le compartiment 6 s'engageant dans la descente, soient transférés dans la trémie 9, la paroi latérale 13' de cette trémie 9 située en regard de la face descendante de la bande transporteuse 3 peut être oblique et sensiblement parallèle aux séparateurs 5 se trouvant sur la face descendante de cette bande transporteuse 3.

La trémie 9 peut comprendre :
- un distributeur un à un 10 du type susdit qui est disposé dans son fond ;
- deux parois latérales 13, 13' ;
- un dispositif cylindrique et mobile autour de son axe 14 du type susdit, obturant l'espace compris entre l'extrémité inférieure de la paroi latérale 13 qui figure à gauche sur la figure 3 et le distributeur un à un 10.

La trémie 9 ainsi que le convoyeur 2 peuvent chacun être compris dans une enceinte distincte 21, 21' afin de les protéger. Dans ce cas, le dispositif selon l'invention 1 présente les spécificités suivantes :
- l'enceinte 21 du convoyeur 2 comprend une ouverture 20 située à proximité du sommet du convoyeur 2 et disposée du côté où se trouve la face descendante de la bande transporteuse 3 ;
- la trémie 9 comporte un couvercle 19 rabattable qui permet d'accéder par une ouverture 22 à son espace intérieur, ce couvercle 19 étant disposé de façon à être en position fermée en face de ladite ouverture 20 afin de permettre le passage des objets en forme de bâtonnets 7 des compartiments 6 vers la trémie 9 lorsque ledit couvercle 19 est relevé.

De manière avantageuse, afin d'assurer un guidage optimal des objets en forme de bâtonnets 7 lors de leur transfert dans la trémie 9, le dispositif selon l'invention 1 peut comporter une chicane 18 comprenant :
- un premier élément 24 fixé sur la face extérieure de l'enceinte 21 du convoyeur 2, à la base de ladite ouverture 20 ; ce premier élément 24 comprend un prolongement 23 dirigé vers l'ouverture 22 de la trémie 9 et dont la pente est préférentiellement moins accentuée que celle des séparateurs 5 se trouvant sur la face descendante du convoyeur 2 afin de ralentir la course des objets en forme de bâtonnets 7 lors de leur transfert dans la trémie 9 ;
- un second élément 24' compris dans la trémie 9 et comportant :
   o un premier sous - élément 25 fixé à l'enceinte 21' de la trémie 9 ;
   o un second sous - élément 25' s'étendant en direction de ladite paroi latérale 13' de la trémie 9 et disposé de manière à ce que le point de chute des objets en forme de bâtonnets 7 sur ce second sous - élément 25' soit à une distance réduite de l'extrémité inférieure du prolongement 23 du premier élément 24, et en ce que l'extrémité inférieure de ce second sous - élément 25' soit à proximité de ladite paroi latérale 13' de la trémie 9.

De cette manière, grâce à cette chicane 18, le contrôle du flux des objets en forme de bâtonnets 7 déversés dans la trémie 9 et de leur vitesse de chute est optimisé.

Le dispositif selon cette variante d'exécution de l'invention 1 peut comprendre :
- un détecteur 16 du type susdit permettant d'assurer l'arrêt de la bande transporteuse 3 à chaque avancée d'un pas en fonction de repères déterminés ; et
- un détecteur 16' du type susdit permettant de détecter le transfert des objets en forme de bâtonnets 7 dans la trémie 9, le détecteur 16' étant alors positionné entre la partie inférieure du carter 8 et la trémie 9.

De cette façon, à chaque déplacement de la bande transporteuse 3 correspondant à un pas, les objets en forme de bâtonnets 7 compris dans le compartiment 6 qui se trouve positionné au - dessus de la trémie 9, sont transférés de manière contrôlée dans ladite trémie 9, avant de venir s'engager par gravité dans le distributeur un à un 10, le guidage de leur chute dans la trémie 9 étant optimisé par la présence de ladite chicane 18.

## Revendications

1. Dispositif (1) pour la distribution un à un d'objets en forme de bâtonnets (7), ce dispositif (1) faisant intervenir :
• un convoyeur (2) comprenant une bande transporteuse sans fin (3) circulant autour d'au moins deux poulies ou galets (4, 4') respectivement amont et aval dont l'un au moins est entraîné par un moteur, la face extérieure de cette bande (3) étant munie de séparateurs transversaux (5) qui délimitent une succession de compartiments (6) dans lesquels les objets en forme de bâtonnets (7) viennent se disposer ;
• une trémie (9) dans laquelle les objets en forme de bâtonnets (7) contenus dans les compartiments (6) sont successivement déversés ;
• un distributeur un à un (10) disposé dans le fond de la trémie (9) et dans lequel les objets en forme de bâtonnets (7) viennent s'engager par gravité.
**caractérisé en ce qu'**il comprend :
• un carter de support et de guidage (8) comprenant une forme semi-cylindrique, sensiblement coaxial à la poulie aval (4') et dont le rayon est sensiblement égal à la somme du rayon de la poulie (4') et de la hauteur des séparateurs (5), ce carter (8) étant orienté de telle manière qu'il assure le maintien des objets en forme de bâtonnets (7) à l'intérieur de leurs compartiments respectifs (6) lors du passage de la bande (3) sur ladite poulie (4') ;
• une cloison verticale flexible (11) séparant l'espace interne de la trémie (9) en deux sous - parties communicantes (12, 12'), l'axe vertical de cette cloison (11) et l'extrémité inférieure dudit carter (8) étant sensiblement coaxiaux.

2. Dispositif (1) pour la distribution un à un d'objets en forme de bâtonnets (7) selon la revendication 1,
**caractérisé en ce que** le distributeur un à un (10) est commandé par un moteur et qu'il présente sensiblement la forme d'un magasin cylindrique et mobile autour de son axe, il comprend sur sa surface supérieure des encoches coaxiales (15) qui présentent sensiblement une forme semi - cylindrique et dont le diamètre est sensiblement égal à celui d'un objet en forme de bâtonnets (7).

3. Dispositif (1) pour la distribution un à un d'objets en forme de bâtonnets (7) selon l'une des revendications 1 et 2,
**caractérisé en ce que** la partie inférieure de la cloison verticale (11) et ledit distributeur un à un (10) sont séparés d'une distance sensiblement égale au diamètre d'un objet en forme de bâtonnets (7).

4. Dispositif (1) pour la distribution un à un d'objets en forme de bâtonnets (7) selon l'une des revendications 1 à 3,
**caractérisé en ce que** la trémie (9) comprend des parois latérales (13, 13') qui sont préférentiellement obliques par rapport à la cloison verticale (11).

5. Dispositif (1) pour la distribution un à un d'objets en forme de bâtonnets (7) selon la revendication 4,
**caractérisé en ce que** la trémie (9) comprend un dispositif cylindrique et mobile autour de son axe (14) obturant l'espace compris entre l'extrémité inférieure de la paroi latérale (13) et le distributeur un à un (10), la distance minimale qui sépare ce dispositif (14) de la cloison verticale (11) étant sensiblement égale au diamètre d'un objet en forme de bâtonnets (7).

6. Dispositif (1) pour la distribution un à un d'objets en forme de bâtonnets (7) selon l'une des revendications précédentes,
**caractérisé en ce que** la vitesse de déplacement de la bande transporteuse (3) est contrôlée de façon à permettre que lesdits objets en forme de bâtonnets (7) tombent un à un dans l'une desdites parties (12) de la trémie (9).

7. Dispositif (1) pour la distribution un à un d'objets en forme de bâtonnets (7) selon l'une des revendications précédentes,
**caractérisé en ce qu'**il comprend au moins deux détecteurs (16, 16') permettant :
• d'assurer l'arrêt de la bande transporteuse (3) à chaque avancée d'un pas en fonction de repères déterminés, les repères étant définis de manière à ce qu'à chaque arrêt de la bande transporteuse (3) un desdits compartiments (6) se trouve au - dessus de la trémie (9) ; et
• de détecter le transfert des objets en forme de bâtonnets (7) dans la trémie (9), le détecteur (16') étant alors positionné entre la partie inférieure du carter (8) et la trémie (9).

8. Dispositif (1) pour la distribution un à un d'objets en forme de bâtonnets (7) selon l'une des revendications précédentes,
**caractérisé en ce qu'**une partie (12') de la trémie (9) comprend un couvercle (17) qui permet lorsqu'il est relevé, de remplir ladite partie (12') de la trémie (9) d'objets en forme de bâtonnets (7).

9. Dispositif (1) pour la distribution un à un d'objets en forme de bâtonnets (7) selon l'une des revendications précédentes,
**caractérisé en ce que** le convoyeur (2) est compris dans une enceinte afin de le protéger ainsi que les objets en forme de bâtonnets (7), cette enceinte comprenant au moins sur sa partie supérieure, des trappes d'accès disposées de manière à être dans l'axe des compartiments (6) lorsque le convoyeur (1) est à l'arrêt, le dispositif selon l'invention (1) pouvant comprendre un détecteur inductif permettant de détecter l'ouverture desdites trappes.

10. Dispositif (1) pour la distribution un à un d'objets en forme de bâtonnets (7) selon l'une des revendications précédentes,
**caractérisé en ce que** le convoyeur (2) est commandé par une station de commande.

11. Dispositif (1) pour la distribution un à un d'objets en forme de bâtonnets (7) selon l'une des revendications 4 à 10,
**caractérisé en ce que** le convoyeur (2) est disposé selon un axe sensiblement vertical et présente dans ce cas les particularités suivantes :
• le carter de support et de guidage (8) est sensiblement coaxial à la poulie amont (4) ;
• lesdits séparateurs (5) de la bande transporteuse (3) sont disposés obliquement de telle façon qu'ils soient dirigés vers le haut lorsqu'ils se trouvent sur la face ascendante de la bande transporteuse (3) et vers le bas lorsqu'ils se trouvent sur la face descendante ; et
• la trémie (9) est disposée latéralement, à proximité de la partie supérieure du convoyeur (2) et du côté où se trouve la face descendante de la bande transporteuse (3), la paroi latérale (13') de cette trémie (9) située en regard de la face descendante de la bande transporteuse (3) pouvant être oblique et sensiblement parallèle aux séparateurs (5) qui se trouvent sur la face descendante de cette bande transporteuse (3).

12. Dispositif (1) pour la distribution un à un d'objets en forme de bâtonnets (7) selon la revendication 11,
**caractérisé en ce que** la trémie (9) ainsi que le convoyeur (2) sont chacun compris dans une enceinte distincte (21, 21') afin de les protéger, dans ce cas :
• l'enceinte (21) du convoyeur (2) comprend une ouverture (20) située à proximité du sommet du convoyeur (2) et disposée du côté où se trouve la face descendante de la bande transporteuse (3) ;
• la trémie (9) comporte un couvercle (19) rabattable qui permet d'accéder par une ouverture (22) à son espace intérieur, ce couvercle (19) étant disposé de façon à être en position fermée en face de ladite ouverture (20) afin de permettre le passage des objets en forme de bâtonnets (7) des compartiments (6) vers la trémie (9) lorsque ledit couvercle (19) est relevé.

13. Dispositif (1) pour la distribution un à un d'objets en forme de bâtonnets (7) selon la revendication 12,
**caractérisé en ce qu'**il comporte une chicane (18) comprenant :
• un premier élément (24) fixé sur la face extérieure de l'enceinte (21) du convoyeur (2), à la base de ladite ouverture (20) ; ce premier élément (24) comprend un prolongement (23) dirigé vers l'ouverture (22) de la trémie (9) et dont la pente est préférentiellement moins accentuée que celle des séparateurs (5) se trouvant sur la face descendante du convoyeur (2) afin de ralentir la course des objets en forme de bâtonnets (7) lors de leur transfert dans la trémie (9) ;
• un second élément (24') compris dans la trémie (9) et comportant :
o un premier sous - élément (25) fixé à l'enceinte (21') de la trémie (9) ;
o un second sous - élément (25') s'étendant en direction de ladite paroi latérale (13') de la trémie (9) et disposé de manière à ce que le point de chute des objets en forme de bâtonnets (7) sur ce second sous - élément (25') soit à une distance réduite de l'extrémité inférieure du prolongement (23) du premier élément (24), et **en ce que** l'extrémité inférieure de ce second sous - élément (25') soit à proximité de ladite paroi latérale (13') de la trémie (9).

## Claims

1. Device (1) for the individual distribution of small stick-shaped objects (7), this device (1) making use of:
- a conveyor (2) comprising an endless conveyor belt (3) circulating around at least two pulleys or rollers (4, 4') respectively upstream and downstream of which at least one is driven by a motor, the outer side of this belt (3) being provided with transversal separators (5) which delimit a succession of compartments (6) wherein the small stick-shaped objects (7) became arranged;
- a hopper (9) wherein the small stick-shaped objects (7) contained in compartments (6) are successively dumped;
- an individual distributor (10) arranged in the base of the hopper (9) and wherein the small stick-shaped objects (7) become engaged via gravity,
**characterised in that** it comprises:
- a support and guide casing (8) comprising a semi-cylindrical form, substantially coaxial to the downstream pulley (4') and the radius of which is substantially equal to the sum of the radius of the pulley (4') and of the height of the separators (5), this casing (8) being oriented in such a way that it maintains the small stick-shaped objects (7) inside their respective compartments (6) during the passing of the belt (3) on said pulley (4');
- a flexible vertical partition (11) separating the internal space of hopper (9) into two communicating sub-portions (12, 12'), the vertical axis of this partition (11) and the lower end of said casing (8) being substantially coaxial.

2. Device (1) for the individual distribution of small stick-shaped objects (7) according to claim 1,
**characterised in that** the individual distributor (10) is controlled by a motor and that it substantially has the form of a cylindrical and mobile magazine around the axis thereof, it comprises on the upper surface thereof coaxial slots (15) which substantially have a semi-cylindrical form and of which the diameter is substantially equal to that of a small-stick shaped object (7).

3. Device (1) for the individual distribution of small stick-shaped objects (7) according to one of claims 1 and 2,
**characterised in that** the lower portion of vertical partition (11) and said individual distributor (10) are separated by a distance that is substantially equal to the diameter of small-stick shaped object (7).

4. Device (1) for the individual distribution of small stick-shaped objects (7) according to one of claims 1 to 3,
**characterised in that** hopper (9) comprises lateral walls (13, 13') which are preferably oblique in relation to vertical partition (11).

5. Device (1) for the individual distribution of small stick-shaped objects (7) according to claim 4,
**characterised in that** the hopper (9) comprises a cylindrical and mobile device around the axis thereof (14) sealing the space contained between the lower end of lateral wall (13) and the individual distributor (10), the minimum distance that separates this device (14) from vertical partition (11) being substantially equal to the diameter of small-stick shaped object (7).

6. Device (1) for the individual distribution of small stick-shaped objects (7) according to one of the preceding claims,
**characterised in that** the displacement speed of conveyor belt (3) is controlled so as to make it possible for said small stick-shaped objects (7) to fall one by one into one of said portions (12) of the hopper (9).

7. Device (1) for the individual distribution of small stick-shaped objects (7) according to one of the preceding claims,
**characterised in that** it comprises at least two sensors (16, 16') making it possible:
- to ensure that the conveyor belt (3) stops at each advance of one step according to defined marks, the marks being defined in such a way that at each stopping of the conveyor belt (3) one of said compartments (6) is located above the hopper (9); and
- to detect the transfer of the small stick-shaped objects (7) into the hopper (9), the sensor (16') being then positioned between the lower portion of casing (8) and the hopper (9).

8. Device (1) for the individual distribution of small stick-shaped objects (7) according to one of the preceding claims,
**characterised in that** a portion (12') of the hopper (9) comprises a lid (17) which when raised, makes it possible to fill said portion (12') of the hopper (9) with small stick-shaped objects (7).

9. Device (1) for the individual distribution of small stick-shaped objects (7) according to one of the preceding claims,
**characterised in that** the conveyor (2) is contained within an enclosure in order to protect it as well as the small stick-shaped objects (7), this enclosure comprising at least on the upper portion thereof, trap doors arranged so as to be in the axis of compartments (6) when the conveyor (1) is idle, the device according to the invention (1) being able to comprise an inductive sensor making it possible to detect the opening of said trap doors.

10. Device (1) for the individual distribution of small stick-shaped objects (7) according to one of the preceding claims,
**characterised in that** the conveyor (2) is controlled by a control station.

11. Device (1) for the individual distribution of small stick-shaped objects (7) according to one of claims 4 to 10,
**characterised in that** the conveyor (2) is arranged according to a substantially vertical axis and has in this case the following particularities:
- the support and guide casing (8) is substantially coaxial to the upstream pulley (4);
- said separators (5) of the conveyor belt (3) are arranged obliquely in such a way that they are directed upwards when they are on the ascending side of the conveyor belt (3) and downwards when they are on the descending side; and
- the hopper (9) is arranged laterally, in the vicinity of the upper portion of the conveyor (2) and on the side where the descending side of the conveyor belt (3) is located, the lateral wall (13') of this hopper (9) located opposite the descending side of the conveyor belt (3) being able to be oblique and substantially parallel to the separators (5) which are located on the descending side of this conveyor belt (3).

12. Device (1) for the individual distribution of small stick-shaped objects (7) according to claim 11,
**characterised in that** the hopper (9) as well as the conveyor (2) are each contained within a distinct enclosure (21, 21') in order to protect them, in this case:
- the enclosure (21) of the conveyor (2) comprises an opening (20) located in the vicinity of the apex of the conveyor (2) and arranged on the side where the descending side of the conveyor belt (3) is located;
- the hopper (9) comprises a flip-down lid (19) which makes it possible to access its inner space via an opening (22), this lid (19) being arranged so as to be in closed position opposite said opening (20) in order to allow for the passing of the small stick-shaped objects (7) from compartments (6) to the hopper (9) when said lid (19) is raised.

13. Device (1) for the individual distribution of small stick-shaped objects (7) according to claim 12,
**characterised in that** it comprises a baffle (18) comprising:
- a first element (24) fixed on the outer side of the enclosure (21) of conveyor (2), at the base of said opening (20); this first element (24) comprises an extension (23) directed towards the opening (22) of the hopper (9) and of which the slope is preferably less accentuated than that of the separators (5) located on the descending side of the conveyor (2) in order to slow down the travel of the small stick-shaped objects (7) during their transfer into the hopper (9);
- a second element (24') contained in hopper (9) and comprising:
- a first sub-element (25) fixed to enclosure (21') of hopper (9);
- a second sub-element (25') extending in the direction of said lateral wall (13') of the hopper (9) and arranged in such a way that the falling point of the small stick-shaped objects (7) onto this second sub-element (25') is at a reduced distance from the lower end of the extension (23) of the first element (24), and **in that** the lower end of this second sub-element (25') is in the vicinity of said lateral wall (13') of the hopper (9).

## Patentansprüche

1. Vorrichtung (1) zur Einzelverteilung von Gegenständen in Form von Stäbchen (7), wobei diese Vorrichtung (1) folgendes einsetzt:
• eine Fördereinrichtung (2), die ein Transportendlosband (3) beinhaltet, das um mindestens zwei Scheiben bzw. Rollen (4, 4') aufwärts bzw. abwärts zirkuliert, wovon mindestens eine von einem Motor angetrieben wird, wobei die Außenfläche dieses Bandes (3) mit transversalen Trennvorrichtungen (5) versehen ist, die eine Abfolge von Kompartimenten (6) begrenzen, in denen die Gegenstände in Form von Stäbchen (7) angeordnet sind;
• einen Schacht (9), in den die Gegenstände in Form von Stäbchen (7), die in den Kompartimenten (6) enthalten sind, nacheinander ausgekippt werden;
• einen Einzelverteiler (10), der im Fond des Schachts (9) angeordnet ist und in den die Gegenstände in Form von Stäbchen (7) durch Schwerkraft hineinfallen;
**dadurch gekennzeichnet, dass** sie folgendes beinhaltet:
• ein Stütz- und Führungsgehäuse (8), das eine halbzylindrische Form beinhaltet, die im Wesentlichen koaxial zu der Abwärts-Scheibe (4') ist und dessen Radius in Wesentlichen gleich der Summe des Radius der Scheibe (4') und der Höhe der Trennvorrichtungen (5) ist, wobei dieses Gehäuse (8) so ausgerichtet ist, dass es das Halten von Gegenständen in Form von Stäbchen (7) im Inneren von ihren jeweiligen Kompartimenten (6) während der Passage des Bandes (3) über die Scheibe (4') sicher stellt;
• eine vertikale flexible Trennwand (11), die den Innenraum des Schachts (9) in zwei kommunizierende Untereinheiten (12; 12') trennt, wobei die vertikale Achse dieser Trennwand (11) und das untere Ende des Gehäuses (8) in Wesentlichen koaxial sind.

2. Vorrichtung (1) zur Einzelverteilung von Gegenständen in Form von Stäbchen (7) nach Anspruch 1, **dadurch gekennzeichnet, dass** der Einzelverteiler (10) von einem Motor gesteuert wird und im Wesentlichen die Form eines zylindrischen und um seine Achse beweglichen Speichers aufweist, er auf seiner oberen Fläche koaxiale Kerben (15) beinhaltet, die im Wesentlichen ein halbzylindrische Form aufweisen und deren Durchmesser im Wesentlichen gleich demjenigen eines Gegenstands in Form von Stäbchen (7) ist.

3. Vorrichtung (1) zur Einzelverteilung von Gegenständen in Form von Stäbchen (7) nach einem der Ansprüche 1 und 2,
**dadurch gekennzeichnet, dass** der untere Teil der vertikalen Trennwand (11) und der Einzelverteilern (10) um einen Abstand getrennt sind, der im Wesentlichen gleich dem Durchmesser eines Gegenstands in Form von Stäbchen (7) ist.

4. Vorrichtung (1) zur Einzelverteilung von Gegenständen in Form von Stäbchen (7) nach einem der Ansprüche 1 bis 3,
**dadurch gekennzeichnet, dass** der Schacht (9) Seitenwände (13, 13') beinhaltet, die vorzugsweise schräg sind bezüglich der vertikalen Trennwand (11).

5. Vorrichtung (1) zur Einzelverteilung von Gegenständen in Form von Stäbchen (7) nach Anspruch 4,
**dadurch gekennzeichnet, dass** der Schacht (9) eine zylindrische und um seine Achse (14) bewegliche Vorrichtung beinhaltet, die den Raum, der zwischen dem unteren Ende der Seitenwand (13) und dem Einzelverteiler (10) eingeschlossen ist, abdichtet, wobei der minimale Abstand, der diese Vorrichtung (14) von der vertikalen Trennwand (11) trennt, im Wesentlichen gleich dem Durchmesser eines Gegenstands in Form von Stäbchen (7) ist.

6. Vorrichtung (1) zur Einzelverteilung von Gegenständen in Form von Stäbchen (7) nach einem der vorhergehenden Ansprüche,
**dadurch gekennzeichnet, dass** die Geschwindigkeit der Verschiebung des Transportbands (3) so kontrolliert wird, dass es möglich ist, dass die Gegenstände in Form von Stäbchen (7) einzeln in einen der Teile (12) des Schachts (9) fallen.

7. Vorrichtung (1) zur Einzelverteilung von Gegenständen in Form von Stäbchen (7) nach einem der vorhergehenden Ansprüche,
**dadurch gekennzeichnet, dass** sie mindestens zwei Detektoren (16, 16') beinhaltet, die folgendes ermöglichen:
• Sicherstellen des Anhaltens des Transportbands (3) bei jedem Vorschub von einem Schritt in Funktion von bestimmten Einstellungen, wobei die Einstellungen so definiert sind, dass bei jedem Halt des Transportbands (3) eines der Kompartimente (6) sich oberhalb des Schachts (9) befindet; und
• Nachweisen des Überführens der Gegenstände in Form von Stäbchen (7) in den Schacht (9), wobei der Detektor (16') demnach zwischen dem unteren Teil des Gehäuses und dem Schacht (9) positioniert ist.

8. Vorrichtung (1) zur Einzelverteilung von Gegenständen in Form von Stäbchen (7) nach einem der vorhergehenden Ansprüche,
**dadurch gekennzeichnet, dass** ein Teil (12') des Schachts (9) einen Deckel (17) beinhaltet, der es erlaubt, wenn er abgenommen ist, den Teil (12') des Schachts (9) mit Gegenständen in Form von Stäbchen (7) zu befüllen.

9. Vorrichtung (1) zur Einzelverteilung von Gegenständen in Form von Stäbchen (7) nach einem der vorhergehenden Ansprüche,
**dadurch gekennzeichnet, dass** die Fördereinrichtung (2) in einer Einfriedung umfasst ist, um sie sowie die Gegenstände in Form von Stäbchen (7) zu schützen, wobei diese Einfriedung mindestens auf ihrem oberen Teile Zugangsklappen beinhaltet, die so angeordnet sind, das auf der Achse der Kompartimente (6) liegen, wenn die Fördereinrichtung (1) still steht, wobei die erfindungsgemäße Vorrichtung (1) einen induktiven Detektor beinhalten kann, durch den sich das Öffnen der Klappen nachweisen lässt.

10. Vorrichtung (1) zur Einzelverteilung von Gegenständen in Form von Stäbchen (7) nach einem der vorhergehenden Ansprüche,
**dadurch gekennzeichnet, dass** die Fördereinrichtung (2) von einer Steuerstation gesteuert wird.

11. Vorrichtung (1) zur Einzelverteilung von Gegenständen in Form von Stäbchen (7) nach einem der Ansprüche 4 bis 10,
**dadurch gekennzeichnet, dass** die Fördereinrichtung (2) zu einer im Wesentlichen vertikalen Achse angeordnet ist und in diesem Fall die folgenden Besonderheiten aufweist:
• das Stütz- und Führungsgehäuse (8) ist im Wesentlichen koaxial zu der Aufwärts-Scheibe (4);
• die Trennvorrichtungen (5) des Transportbands (3) sind schräg angeordnet, derart dass sie nach oben gelenkt werden, wenn sie sich auf der aufsteigenden Fläche des Transportbands (3) befinden, und nach unten gelenkt werden, wenn sie sich auf der absteigenden Fläche befinden; und
• der Schacht (9) seitlich in der Nachbarschaft des oberen Teils der Fördereinrichtung (2) und auf der Seite, wo sich die absteigenden Fläche des Transportbands (3) befindet, angeordnet ist, wobei die Seitenwand (13') dieses Schachts (9), der bezüglich der absteigenden Fläche des Transportbands (3) angeordnet ist, schräg und im Wesentlichen parallel zu den Trennvorrichtungen (5) sein kann, die sich auf der absteigenden Fläche dieses Transportbands (3) befinden.

12. Vorrichtung (1) zur Einzelverteilung von Gegenständen in Form von Stäbchen (7) nach Anspruch 11,
**dadurch gekennzeichnet, dass** der Schacht (9) sowie die Fördereinrichtung (2) jeweils in einer distinkten Einfriedung (21, 21') eingeschlossen sind, um sie zu schützen, in diesem Fall:
• beinhaltet die Einfriedung (21) der Fördereinrichtung (2) eine Öffnung (20), die in der Nachbarschaft des Scheitelpunkts der Fördereinrichtung (2) liegt und auf der Seite angeordnet ist, wo sich die absteigende Fläche des Transportbands (3) befindet;
• beinhaltet der Schacht (9) einen Klappdeckel (19), der den Zugang über eine Öffnung (22) zu seinem Innenraum erlaubt, wobei dieser Deckel (19) so angeordnet ist, dass er sich in geschlossener Position gegenüber der Öffnung (20) befindet, um den Übergang der Gegenstände in Form von Stäbchen (7) der Kompartimente (6) zu dem Schacht (9) zu ermöglichen, wenn der Deckel (19) abgenommen ist.

13. Vorrichtung (1) zur Einzelverteilung von Gegenständen in Form von Stäbchen (7) nach Anspruch 12,
**dadurch gekennzeichnet, dass** sie ein Prallblech (18) beinhaltet, das folgenden beinhaltet:
• ein erstes Element (24), das an der Außenfläche der Einfriedung (21) der Fördereinrichtung (2) an der Basis der Öffnung (20) befestigt ist; wobei dieses erste Element (24) eine Verlängerung (23) beinhaltet, die in Richtung der Öffnung (22) des Schachts (9) gelenkt wird und deren Neigung vorzugsweise weniger hervorgehoben ist als diejenige der Trennvorrichtungen (5), die sich auf der absteigenden Fläche der Fördereinrichtung (2) befinden, um den Lauf der Gegenstände in Form von Stäbchen (7) während ihrer Überführung in den Schacht (9) zu verlangsamen;
• ein zweites Element (24'), das in dem Schacht eingeschlossen ist und folgendes beinhaltet:
o ein erstes Unterelement (25), das an der Einfriedung (21') des Schachts (9) befestigt ist;
o ein zweites Unterelement (25'), das sich in Richtung der Seitenwand (13') des Schachts (9) erstreckt und so angeordnet ist, dass der Fallpunkt der Gegenstände in Form von Stäbchen (7) auf dieses zweite Unterelement (25') in einem verminderten Abstand von dem unteren Ende der Verlängerung (23) des ersten Elements (24) vorhanden ist, und **dadurch** dass das untere Ende dieses zweiten Unterelements (25') sich in der Nachbarschaft der Seitenwand (13') des Schachts (9) befindet.
